(19) **Europäisches Patentamt**

**European Patent Office**

**Office européen des brevets**

(11) **EP 1 096 749 A2**

(12) **EUROPEAN PATENT APPLICATION**

(43) Date of publication:
**02.05.2001 Bulletin 2001/18**

(51) Int. Cl.[7]: **H04L 29/06**

(21) Application number: **00100446.4**

(22) Date of filing: **10.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.10.1999 JP 30657699**

(71) Applicant:
**V-Sync Technology CO., Ltd.**
**Okayama-shi, Okayama-ken (JP)**

(72) Inventor: **Ohta, Shingo**
**Okayama-shi, Okayama-ken 701-0163 (JP)**

(74) Representative:
**DIEHL GLAESER HILTL & PARTNER**
**Patentanwälte**
**Augustenstrasse 46**
**80333 München (DE)**

(54) **Information distribution system**

(57)    A rational information distribution system capable of on-demand services is provided. A distribution request made from an information terminal POD results in a distribution information being distributed from the central control center to the information terminal POD. A distribution request made from an information terminal POD connected through a regional control center #Ni connected to a communication line LX results in the requested distribution information being distributed from the central-control-center side to the information terminal POD.

Fig.1

**Description**

The present invention relates to an information distribution system.

With the advance of communication networks using optical fiber transmission networks and the like, it has been attempted to develop information distribution systems which transmit various types of information at higher speeds so as to improve users' convenience.

For example, in a typical method for selling contents information such as music and image, the contents information is recorded in advance onto information recording media such as a compact disc (CD), mini disc (MD) and digital video disc (DVD), and then these information recording media are sold on the over-the-counter basis. Meantime, attempts are being pursued to develop an information distribution system in which information terminals are laid in each region on the customer side and then the contents information is distributed to each information terminal through a communication network so as to improve the convenience of the customers (consumers).

In this conventional information distribution system, the information terminals have storages such as a large capacity hard disc, adopting a system configuration that various contents information is distributed from a computer system installed in the distribution station on the information-distributor side through the communication network to the information terminals so that the various contents information is stored into the storages in advance.

Here, when a customer operates the operating panel provided on an information terminal to select a desired piece of music and the like, the information terminal makes a search over the contents information pre-stored in its own storages, and records the contents information retrieved onto an information recording medium for sale.

While in the conventional information distribution system described above the contents information is transmitted from the distribution station to each information terminal by using a communication network, the only purpose the communication network is used for is to pre-store the contents information into the storage in each information terminal. On this account, customers can select their desired contents information from among nothing but the contents information pre-stored in the storages. Therefore, it has been hard to say that an on-demand system is realized in which selections can be made on plenty of contents information provided at the distribution-station side.

Besides, contents information such as music and image covers wide from old standards to those running fast with fashion, and branches out widely depending on genre, also. There has been totally impossible to pre-store such enormous kinds of contents information into the storages in conventional information terminals, far from an information distribution system which allows so-called rich assortment of merchandise.

If an information distribution of on-demand system were intended upon the conventional information distribution system described above, the contents information selected (requested) by a customer from the information-terminal side would require quite a long time to complete its transmission back from the distribution-station side, causing a problem in that the waiting time of the customer becomes longer to preclude prompt services.

In addition, reduction of this time between the customer's request and the sending back of the contents information would require communication lines capable of large-capacity transmission. This produces a problem in that the conventional information distribution system cannot achieve efficient distribution in regions having no choice but to use communication lines with limited transmission capacity. In other words, the conventional system has not been an information distribution system of high transmission efficiency.

Furthermore, while the process of accounting is indispensable to the distribution of contents information to customers, there have been constructed no systems which can efficiently carry out both the distribution of contents information and the accounting.

Note that the foregoing problems of the prior art have been presented solely as examples. It will be appreciated that there has been developed no information distribution system which can carry out rational distribution services in consideration of the customers' convenience.

It is therefore the object of the present invention to provide an information distribution system which overcomes the drawbacks of the prior art products. This object is solved by the information distribution system according to independent claim 1 and the method for distributing information according to independent claim 7.

Further advantageous features, aspects and details of the invention are evident from the dependent claims, the description and the drawings. The claims are to be understood as a first non-limiting approach to define the invention in general terms.

The invention relates to an information distribution system for distributing various types of contents information such as music and image through a communication network.

The invention provides an information distribution system which is capable of on-demand services and has a rational configuration.

To achieve the foregoing object, the present invention provides an information distribution system comprising a central distribution apparatus, a plurality of relay distribution apparatuses, and one or plurality of information terminals. The central distribution apparatus, being connected to a communication line network, controls and manages various types of and a large amount of distribution information and sends back, in accordance with a distribution request from the downstream side on the aforesaid communication line network, distribution information corresponding to the distribution request. The plurality of relay distribution apparatuses are put in network connection on the downstream side of the aforesaid central distribution apparatus through the aforesaid communication line network. The aforesaid relay distribution apparatuses each has a storage. The information terminal or terminals are connected onto the downstream side of the aforesaid central distribution apparatus or the aforesaid relay distribution apparatuses through a communication line. The aforesaid information terminal or terminals issue to the aforesaid central distribution apparatus or the aforesaid relay distribution apparatuses connected a distribution request for arbitrary distribution information among the aforesaid distribution information under control and management of the aforesaid central distribution apparatus, and receives the aforesaid arbitrary distribution information being sent back in accordance with the distribution request. Here, the aforesaid relay distribution apparatuses each receives a distribution request for the aforesaid arbitrary distribution information issued from the information-terminal side positioned on the downstream side among the aforesaid one or plurality of information terminals. When the distribution information corresponding to the aforesaid distribution request is stored in its storage, the relay distribution apparatus sends back the aforesaid arbitrary distribution information stored in the aforesaid storage to the downstream side. When in contrast the distribution information corresponding to the aforesaid distribution request is not stored in its storage, the relay distribution apparatus further issues a distribution request for the aforesaid arbitrary distribution information to a relay distribution apparatus positioned on the upstream side among the aforesaid plurality of relay distribution apparatuses or to the central distribution apparatus positioned immediately above on the upstream side, so as to receive and distribute to the downstream side the aforesaid arbitrary distribution information being distributed from the relay distribution apparatus on the upstream side or the aforesaid central distribution apparatus having the aforesaid arbitrary distribution information in accordance with the aforesaid further distribution request, and store the aforesaid arbitrary distribution information received.

According to such configuration, when a distribution request for customer-desired arbitrary distribution information is issued from an information terminal connected to the central distribution apparatus, the distribution information requested is distributed from the central distribution apparatus to the information terminal.

Besides, when customer-desired arbitrary distribution information is requested from an information terminal which is linked through a relay distribution apparatus connected to the communication line network, the distribution information requested is distributed from the central-distribution-apparatus side to the information terminal. Here, if the relay distribution apparatus positioned immediately above on the upstream side of the information terminal previously stores the requested distribution information in its storage, then that distribution information is distributed to the information terminal.

Meanwhile, in the absence of the distribution information requested, the relay distribution apparatus further issues the same distribution request to a relay distribution apparatus on the upstream side. If absent again, the upstream-side relay distribution apparatus further issues the same distribution request to a relay distribution apparatus yet on the upstream side; and in this manner the distribution request is forwarded upstream in sequence. If finally the distribution request reaches the central distribution apparatus, the distribution information requested of distribution is distributed downstream from the central distribution apparatus to the information terminal which initiated the distribution request. Besides, each of the relay distribution apparatuses stores into its storage the aforesaid distribution information being distributed from the central distribution apparatus.

Thus, the distribution information requested from information terminals is stored into each relay distribution apparatus lying on the downstream of the central distribution apparatus. Accordingly, on the next occurrence of the same distribution request, the distribution should be made from a relay distribution apparatus near the information terminal without issuing the distribution request up to the central distribution apparatus. That is, into each relay distribution apparatus is accumulating distribution information according to the types of distribution requests from information terminals and the frequency of the requests. This realizes rational distribution capable of on-demand services.

Moreover, the aforesaid central distribution apparatus or relay distribution apparatuses, in distributing the aforesaid distribution information to the downstream side, divide the aforesaid distribution information into prescribed packets and distribute the same sequentially. According to such configuration, it becomes possible for the information terminals to perform some other processing in parallel while receiving one packet information.

Additionally, when a relay distribution apparatus receiving the distribution request for the aforesaid arbitrary distribution information issued from the aforesaid information-terminal side positioned on the downstream side does not store the distribution information, the relay distribution apparatus issues a distribution request for the aforesaid arbitrary distribution information to another relay distribution apparatus positioned on the downstream side. In the case where the aforesaid arbitrary distribution information corresponding to that distribution request is stored in the aforesaid another relay distribution apparatus, the relay distribution apparatus receives and stores the aforesaid arbitrary distribution information from the aforesaid another relay distribution apparatus, and further distributes the same to the aforesaid downstream side. Whereas in the cases where a response is returned that the aforesaid arbitrary distribution information is not stored in the storage of the aforesaid another relay distribution apparatus, the relay distribution apparatus further issues a distribution request for the aforesaid arbitrary distribution information to the aforesaid relay distribution apparatus positioned on the upstream side or the central distribution apparatus positioned immediately above on the upstream side.

According to such configuration, relay distribution apparatus not storing the distribution information according to distribution requests from the downstream side should share the distribution information stored in other relay distribution apparatuses nearby to carry out distribution. This allows efficient and rational distribution.

Furthermore, the aforesaid information terminal or terminals each comprises a recorder for recording onto an information recording medium the aforesaid distribution information being sent back in accordance with the distribution request for the aforesaid arbitrary distribution information. According to such configuration, information recording media having distribution information recorded thereon are offered to customers.

Furthermore, the aforesaid information terminal or terminals each has a control unit for vending the aforesaid information recording medium, and sending accounting information on the value for the vending through the aforesaid relay distribution apparatus or apparatuses to the aforesaid central distribution apparatus or sending the same directly to the aforesaid central distribution apparatus. According to such configuration, it becomes possible for the central distribution apparatus to manage, tabulate, and apply other processing to the accounting information, upon the vending of information recording media to customers.

As a further aspect of the invention, a rational information distribution system capable of on-demand services is provided. A distribution request made from an information terminal POD results in a distribution information being distributed from the central control center to the information terminal POD. A distribution request made from an information terminal POD connected through a regional control center #Ni connected to a communication line LX results in the requested distribution information being distributed from the central-control-center side to the information terminal POD. Here, when a regional control center NOC immediately above the information terminal POD stores the distribution information in advance, the distribution information is distributed to the information terminal POD. Meanwhile, in the absence of the distribution information, the regional control center NOC issues the same distribution request to a regional control center NOC on the upstream side. If absent again, the upstream-side regional control center NOC issues the same distribution request to a relay distribution apparatus yet on the upstream side. If after this manner the distribution request finally reaches the central control center #N1, the distribution information is distributed from the central control center #N1. Moreover, each regional control center NOC stores into its storage the aforesaid distribution information being distributed from the central control center #N1.

The above mentioned and other features of the present invention and the invention itself will be better understood by reference to the following detailed description of preferred embodiments of the invention, when considered in conjunction with the accompanying drawings, in which:

Fig. 1 is a block diagram showing a configuration example of the information distribution system according to one embodiment of the present invention;

Fig. 2 is a block diagram showing a configuration example of the center server according to the present invention;

Fig. 3 is a block diagram showing a configuration example of a cache server according to the present invention;

Fig. 4 is a block diagram showing the configuration of an information terminal according to the present invention;

Fig. 5 is a diagram showing an operational example of the information distribution system according to the present invention;

Fig. 6 is a diagram showing another operational example of the information distribution system according to the present invention;

Fig. 7 is an explanatory diagram for illustrating the effect of the information distribution system according to the present invention;

Fig. 8 is an explanatory diagram for further illustrating the effect of the information distribution system according to the present invention;

Fig. 9 is an explanatory diagram for illustrating another distribution method for the information distribution system according to the present invention; and

Fig. 10 is an explanatory diagram for illustrating the function of a cache server in realizing the distribution method as shown in Fig. 9.

Fig. 11 is an explanatory diagram for illustrating a further distribution method for the information distribution system according to the present invention.

Hereinafter, a preferred embodiment of the present invention will be described with reference to the drawings. As a preferred embodiment, an information distribution system chiefly for distributing music information is described.

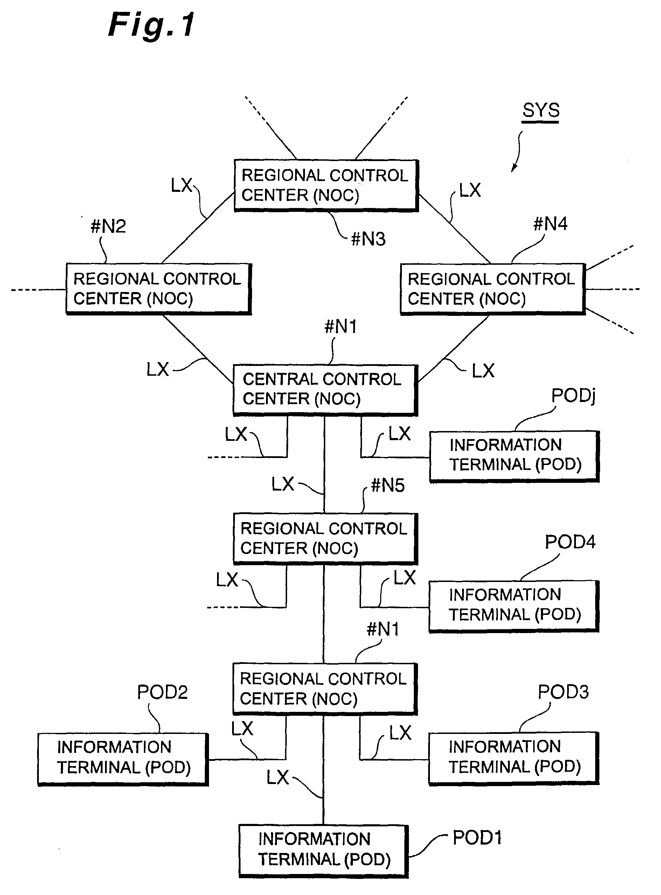

Fig. 1 is a block diagram showing a configuration example of the information distribution system according to the present invention. As shown in Figure 1, the present information distribution system SYS has a central control center #N1, around which an arbitrary number of a plurality of regional control centers #N2-#Ni are provided in network connection through appropriate communication lines LX in a tree form or a star form, or through communication line networks according to a combination of these.

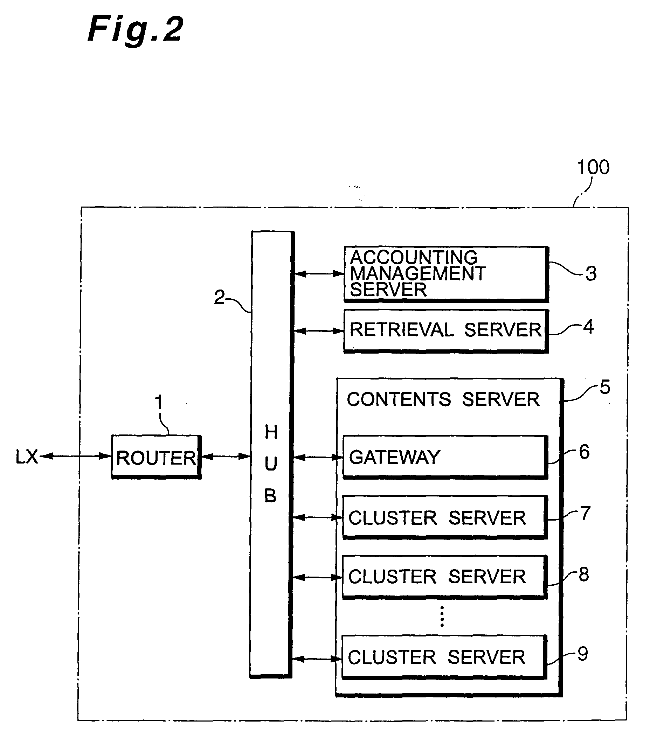

The central control center #N1 is the chief control unit for performing the information distribution services, being constituted e.g. by installing in the building of the information distributing company a center server 100 shown in Fig. 2 which serves as the central distribution apparatus.

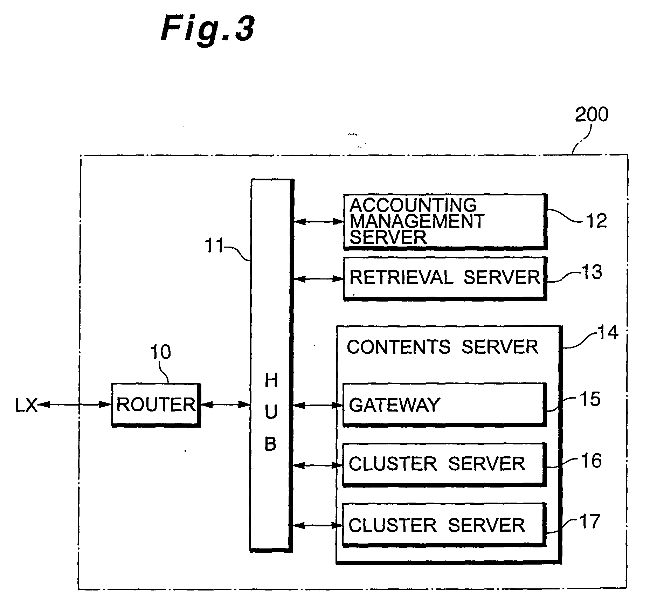

The regional control centers #N2-#Ni are distributed over a plurality of regions for installation, being constituted by installing in the building of each region a cache server 200 shown in Fig. 3 serving as a relay distribution apparatus.

Then, the communication lines LX establish network connection between the center server 100 and each regional cache server 200 to put the regional control centers #N2-#Ni into the network connection around the above-described central control center #N1. For the communication lines LX mentioned above, the present embodiment utilizes commercial communication lines consisting of optical fiber transmission lines. However, it is also possible to use commercial communication lines consisting of coaxial cables.

In the peripheries of the central control center #N1 and the regional control centers #N2-#Ni are suitably laid a plurality of information terminals POD1-PODj. These information terminals POD1-PODj also are suitably connected to the center server 100 installed in the central control center #N1 and the cache servers 200 installed in the regional control centers #N2-#Ni through appropriate communication lines LX.

These information terminals POD1-PODj are laid in positions the nearest to the customer side, or so-called terminal positions such as a shop's premise and a plot in a shop street, to allow customers to use the present information distribution system SYS interactively.

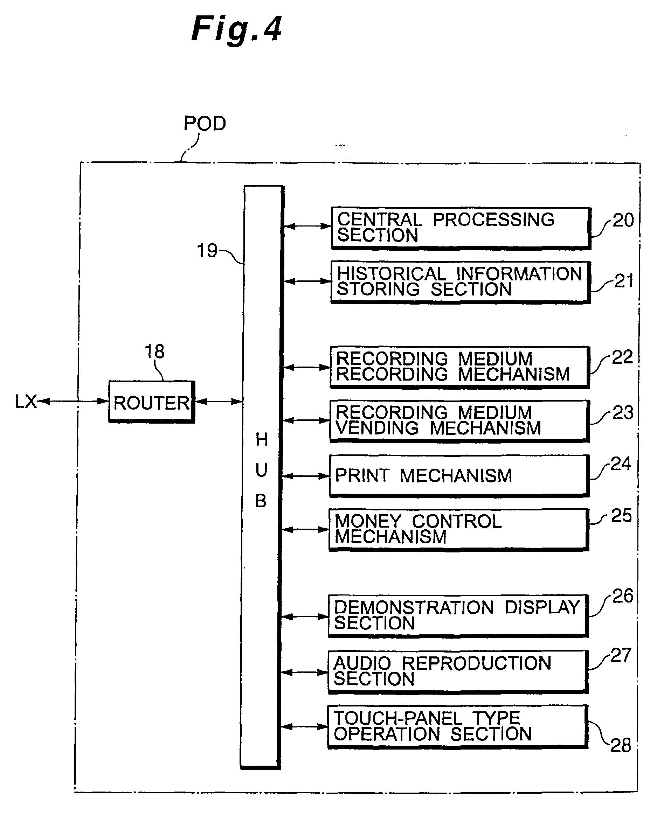

Additionally, these information terminals POD1-PODj each has the system configuration shown in Fig. 4. In appearance, they have a console (not shown) which permits customer's direct operation such as making selection on desired pieces of music. The information terminals POD1-PODj can also use commercial communication lines consisting of coaxial cables for the communication lines LX, along with commercial communication lines consisting of optical fiber transmission lines, to provide direct connection to the central control center #N1 or network connection to the cache server 200 in each regional control center #N2-#Ni.

In this connection, the central control center #N1 and the regional control centers #N2-#Ni are referred to as network operation centers (NOCs), and each information terminal POD1-PODj is referred to as POD.

Next, with reference to the block diagrams of Figs. 2-4, description will be given of the configurations of the center server 100, cache server 200, and information terminal POD.

In Fig. 2, the center server 100 to be installed in the central control center #N1 comprises: a router 1 and a hub 2 serving as the network interface to be connected to communication lines LX; and an accounting management server 3, a retrieval server 4, and a contents server 5 connected to the hub 2 in parallel with each other. Besides, the contents server 5 comprises a gateway 6 and a plurality of cluster servers 7-9.

The accounting management server 3 is a database server, being constituted by a computer system having a storage (not shown) such as a large capacity hard disc drive. Upon receiving accounting data being transferred through the communication lines LX from cache servers 200 in the regional control centers or information terminals POD connected on the downstream side, the accounting management server 3 stores each accounting data into the aforesaid storage and carries out the tabulation of the accounting data.

The retrieval server 4 has the functions of both a data base server and a network server, being constituted by a computer system having a storage (not shown) such as a large capacity hard disc drive.

For its retrieval data, the aforesaid storage in the retrieval server 4 pre-stores name (music title) data on all pieces of music the present information distribution system SYS can distribute and various item data such as artist names and genres corresponding to each of the pieces. These retrieval data are under file management based on a prescribed retrieval algorithm.

In accordance with retrieval requests from cache servers 200 in the regional control centers or information terminals POD connected on the downstream side, the retrieval server 4 retrieves various retrieval data stored in the aforesaid storage and sends back the retrieval result.

The contents server 5 is a computer system comprising the gateway 6 and the plurality of cluster servers 7-9 mentioned above. The cluster servers 7-9 include storages (not shown) such as large capacity hard disc drives, which store in advance the music data (audio data compressed in conformity to AC3 or MPEG-2 audio compression method etc.) of all the pieces of music the present information distribution system SYS can distribute.

When a customer requests distribution of the music data of a desired piece via an information terminal POD, the aforementioned retrieval server 4 receives the distribution request and supplies the information on the music title requested to the gateway 6. Then, the gateway 6 issues to each cluster server 7-9 a request for the music data corresponding to the music title. One of the cluster servers 7-9 which stores the requested music data should send back the music data to the downstream side through the communication lines LX.

Note that the music data requested of distribution is not being transmitted in one lump, but is divided into packets of prescribed data length, which are transmitted in a plurality of times (arbitrary times) N to finally send back the music data. Here, the music data is sent back being encrypted. The decryption key for decrypting the music data is also transmitted downstream from the contents server 5.

Each cluster server 7-9 stores not only music data but also such data as profile data of the artists relating to each piece of music and image data for demonstration. In accordance with requests from the information-terminal POD side, these profile data, image data, and the like are also sent back to the downstream side. The three cluster servers 7-9 illustrated are solely an example. Additional cluster servers can be installed according to the amount of data to store. Moreover, one music data is stored into at least two cluster servers so that even if the music data in one server crashes or is erased by some cause, the music data can be distributed from the other.

Now, with reference to Fig. 3, description will be made on the configuration of the cache server 200 to be installed in the regional control centers #N2-#Ni.

The cache server 200 basically has the same configuration as that of the center server 100 shown in Fig. 2. Namely, the cache server 200 comprises: a router 10 and a hub 11 serving as the network interface to be connected to communication lines LX; and an accounting management server 12, a retrieval server 13, and a contents server 14 which are connected to the hub 11 in parallel with each other. In addition, the contents server 14 comprises a gateway 15 and a plurality of cluster servers 16 and 17.

Note that the cache server 200 is smaller in scale than the center server 100. For example, its cluster servers are smaller in number than those of the center server 100.

Here, the accounting management server 12 is a database server, being constituted by a computer system having a storage (not shown) such as a large capacity hard disc drive. Upon receiving accounting data being transferred through the communication lines LX from cache servers 200 in the regional control centers or information terminals POD connected on the downstream side, the accounting management server 12 stores each accounting data into the storage mentioned above, and performs the tabulation of the accounting data.

Furthermore, the server 12 periodically transfers the tabulation results to the accounting management server 3 provided in the center server 100 of the central control center #N1. In other words, the accounting management server 12 in the cache server 200 controls and tabulates only the accounting data from the information terminals POD laid on the downstream side thereof, and periodically transfers the results to the accounting management server 3 provided in the center server 100 of the central control center #N1.

The retrieval server 13 has the functions of both a database server and a network server, being constituted by a computer system having a storage (not shown) such as a large capacity hard disc drive.

For its retrieval data, the aforesaid storage in the retrieval server 13 stores name (music title) data on pieces of music to be distributed to cache servers 200 or information terminals POD connected on the downstream side, and various item data such as artist names and genres corresponding to each of the pieces. Moreover, these retrieval data are under file management based on a prescribed retrieval algorithm.

While the retrieval server 4 in the center server 100 stores the retrieval data on all the music data the present information distribution system SYS can distribute, the retrieval server 13 in the cache server 200 stores the retrieval data on those requested from cache servers 200 or information terminals POD connected on the downstream side.

For example, the cache server 200 installed in the regional control center #Ni shown in Fig. 1 stores retrieval data on the music data requested from the information terminals POD1, POD2, and POD3 connected on the downstream side.

Besides, the retrieval server 13 of the cache server 200 installed in the regional control center #N5 shown in Fig. 1 stores both the retrieval data on the music data requested from the downstream information terminals POD1, POD2, POD3 through the regional control center #Ni and the retrieval data on the music data requested from the information terminal POD4. In this connection, description will be given later of the principle and operation as to how these retrieval data are sequentially stored into the retrieval server 13 of a cache server 200.

Then, in accordance with retrieval requests from cache servers 200 in the regional control centers or information terminals POD connected on the downstream side, the retrieval server 13 retrieves various retrieval data stored in the aforesaid storage and send back the results of the retrieval.

Furthermore, when a retrieval is made according to a request from a cache servers 200 or an information terminal POD connected on the downstream side with the result that the retrieval data requested is absent, the retrieval server 13 in the cache server 200 issues the same request as that mentioned above through the communication lines LX to the cache server 200 installed in another regional control center positioned on the upstream side or to the center server 100 installed in the central control center #N1.

When the retrieval data according to the request is sent back, the retrieval data 13 stores in its storage the retrieval data sent back, and further sends back this retrieval data to the downstream side.

Accordingly, the retrieval server 13 in the cache server 200 not only sends back retrieval data in response to a request from the downstream side, but, when it fails to retrieve the retrieval data according to the request from the downstream side (i.e. the retrieval data requested is absent), issues the same request to the upstream side as well, so as to store into its own storage and send back to the downstream side the retrieval data being sent back from the regional control center on the upstream side or the central control center #N1.

In this way the retrieval server 13 accumulates new retrieval data into its storage, and sends back, upon the next occurrence of the same request from the downstream side, the newly stored retrieval data to the downstream side. Thus, the retrieval server 13 not always responds to each request from the downstream side by issuing the same request to the central-control-center #N1 side, but often sends back downstream the retrieval data which are being accumulated into the storage in accordance with the requests from information terminals POD. This allows the high-speed sending back of retrieval data to greatly reduce the customers' waiting time.

In addition, the retrieval servers 13 in cache servers 200 intervene between information terminals POD and the retrieval server 4 in the central control center #N1, avoiding frequent retrieval requests from the information terminals POD to the retrieval server 4 (see Fig. 2) in the central control center #N1. On this account, smaller transmission capacities are enough for the communication lines LX, and even such communication lines LX of smaller transmission capacities can realize the prompt retrieval in response to customers' requests.

Now, the contents server 14 comprises the gateway 15 and the plurality of cluster servers 16, 17 mentioned above. The cluster servers 16 and 17 are provided with a storage (not shown) such as a large capacity hard disc drive, in which is stored the music data (compressed audio data) of each piece of music.

It should be noted that while the cluster servers 7-9 in the center server 100 store all the music data the present information distribution system SYS can distribute, the cluster servers 16 and 17 in a cache server 200 store the music data requested from cache servers 200 or information terminals POD connected on the downstream side.

For example, the cache server 200 installed in the regional control center #Ni shown in Fig. 1 stores the music data requested from the information terminals POD1, POD2, and POD3 connected on the downstream side.

Besides, the cluster servers 16, 17 in the cache server 200 installed in the regional control center #N5 shown in Fig. 1 store both the music data requested from the downstream information terminals POD1, POD2, POD3 through the regional control center #Ni and the music data requested from the information terminal POD4.

In this connection, description will be given later of the principle and operation as to how new music data are sequentially stored into the cluster servers 16, 17 of a cache server 200.

When a customer requests distribution of the music data of a desired piece via an information terminal POD, the aforementioned retrieval server 13 receives the distribution request and supplies the information on the music title requested to the gateway 15. Then, the gateway 15 issues to each cluster server 16, 17 a request for the music data corresponding to the music tile. One of the cluster servers 16, 17 storing the music data requested should send back the music data downstream through the communication lines LX.

Here, the music data requested of distribution is not transmitted in one lump, but is divided into packets of prescribed data length, which are transmitted in a plurality of times (arbitrary times) N to finally send back the music data. The music data are sent back being encrypted. The decryption key for decrypting the music data is also transmitted downstream from the contents server 14.

Each cluster server 16, 17 stores not only music data but also such data as profile data of the artists relating to each piece of music and image data for demonstration. In accordance with requests from the information-terminal POD side, these profile data, image data, and the like are also sent back to the downstream side. The two cluster servers 16 and 17 illustrated are solely an example. Additional cluster servers can be installed according to the amount of data to store. Moreover, one music data is stored into at least two cluster servers, so that even when the music data in one server crashes or is erased by some cause, the music data can still be distributed from the other.

Furthermore, when a retrieval is made over the cluster servers 16 and 17 with the result that the music data requested by a customer is not yet stored therein, a request for the sending back of the music data is issued to the cache server 200 installed in another regional control center positioned on the upstream side or the center server 100 installed in the central control center #N1. In other words, when the music data requested is not stored in the cluster servers 16, 17, the music title requested by the customer is forwarded to the retrieval server 13 in the cache server 200 positioned on the upstream side or the retrieval server 4 in the center server 100 so that the music data corresponding to the music title is sent back from a cluster server in the cache server 200 or the center server 100.

When the music data requested is sent back, the cluster servers 16 and 17 store into their storages the music data sent back, and further send back this retrieval data to the downstream side.

Accordingly, the cluster servers 16, 17 in the cache server 200 not only send back music data in response to requests from the downstream side, but, when they fail to retrieve the music data according to the request from the downstream side (i.e. the music data requested is absent), issue the same request to the upstream side as well, so as to store into their own storages and send back to the downstream side the retrieval data being sent back from the regional control center on the upstream side or the central control center #N1.

In this way the cluster servers 16 and 17 accumulate new music data into their storages, and send back, upon the next same request from the downstream side, the newly stored music data to the downstream side. Thus, in accordance with requests from the downstream side the contents server 14 not always issues the same requests to the central-control-center #N1 side, but sends back downstream the music data which are gradually being accumulated into those storages in accordance with the requests from information terminals POD. This allows the high-speed sending back of retrieval data, greatly reducing the customers' waiting time. In addition, the contents servers 14 in cache servers 200 intervene between information terminals POD and the contents server 5 in the central control center #N1 to avoid frequent retrieval requests from the information terminals POD to the contents server 5 (see Fig. 2) in the central control center #N1. On this account, smaller transmission capacities are enough for the communication lines LX, and even such communication lines LX of smaller transmission capacities can realize the prompt retrieval in response to customers' requests.

Next, with reference to the block diagram of Fig. 4, description will be made on the configuration of an information terminal POD.

In the figure, an information terminal POD is provided with a router 18 and a hub 19 serving as the network interface to be connected to communication lines LX. Connected to the hub 19 are a central processing section 20, a historical information storing section 21, a recording medium recording mechanism 22, a recording medium vending mechanism 23, a print mechanism 24, a money control mechanism 25, a demonstration display section 26, an audio reproduction section 27, and a touch-panel type operating section 28.

The central processing section 20, comprising a microprocessor unit (MPU), executes a prescribed system program to control the operation of the entire information terminal POD.

The historical information storing section 21, comprising a storage unit (not shown) such as a hard disc drive, stores as the historical information all contents of the processing performed according to operational situations of the entire information terminal POD and requests from customers. Here, the historical information is recorded under the control of the central processing section 20.

Thereby, when the information terminal POD suffers failure or breakdown of any kind, the system administrator can examine the historical information to quickly pinpoint the cause of the abnormality. The historical information is also transferred to the central-control-center #N1 side periodically, which allows the central control of all information terminals POD.

The recording medium recording mechanism 22 has an insertion slot (not shown) through which an information recording medium such as an MD is inserted, and a recorder (not shown) for recording (downloading) a distributed music data onto the information recording medium inserted.

When a customer puts an information recording medium into the insertion slot and specifies his desired piece of music, the recording medium recording mechanism 22 applies to the music data being distributed the encoding in conformity with the given format of the information recording medium and records the same onto the medium before returns the information recording medium again through the insertion slot for information recording media.

The recording medium vending mechanism 23 previously stocks information recording media (blank information recording media) such as MDs, and offers the same to customers through a prescribed vending slot (not shown) in accordance with the customer's request for sale.

The print mechanism 24 provides customers with various types of information printed on prescribed sheets of paper. For example, text information and image information on the profile and new releases of an artist are printed, and the printed sheets are offered to customers for customer services. Information on the words to the music requested of distribution is also printed and offered to customers.

It should be noted that the information to be printed on such prescribed sheets of paper is not limited to those described above. The information can be added and modified progressively in accordance with customers' needs and suck like. The information to be printed is supplied from the central control center #N1 through the communication lines LX.

The money control mechanism 25 has a money slot, a money discrimination mechanism, and a moneybox all omitted of illustration. When a customer deposits, for the vending action by the present information distribution system SYS, a prescribed amount of coins or bills for the value into the money slot, the money discrimination mechanism makes a discrimination as to whether or not the coins or bills deposited are authentic. If authentic, the payment is determined to be valid, so the accounting data is stored into the historical information storing section 21 and the coins or bills are stocked into the moneybox. When the amount of the deposited money exceeds the price, change should be returned to the customer.

The demonstration display section 26 comprises display means such as a CRT display and a liquid crystal display, a video memory which stores image data for the display means to reproduce and display, and the like. It visually presents to customers various information such as artists' profiles and pop promos on new releases. Such information is also supplied from the central control center #N1 through the communication lines LX, thereby allowing presentation of the latest information to customers.

The audio reproduction section 27 comprised of a digital audio system reproduces the profiles of artists, the music data of new releases, and the like transmitted from the central control center #N1, presenting the same to customers through sound units such as loudspeakers. Note that such information is also supplied from the central control center #N1 through communication lines LX so as to permit presentation of the latest information to customers. The audio reproduction section 27 also performs such processing as offering vocal guidance to customers on how to use the information terminal POD.

The touch-panel type operating section 28 is a console provided with a CRT display. It displays menus to prompt customers to operate. When a customer fingers the screen of the CRT display to specify a desired menu display, the central processing section 20 detects the specified content, and then performs some processing in accordance with the menu specified.

Here, contents and display modes (display designs) of the menu display are capable of appropriate renewals. By way of example, what are displayed may include a retrieval menu for customers to retrieve desired pieces of music, a select menu to specify (determine) desired pieces, a menu to order the vending of information recording media by the recording medium vending mechanism 23, a menu to order the vending of the aforesaid prescribed sheets by the print mechanism, and a menu to switch the contents being reproduced and displayed on the demonstration display section 26.

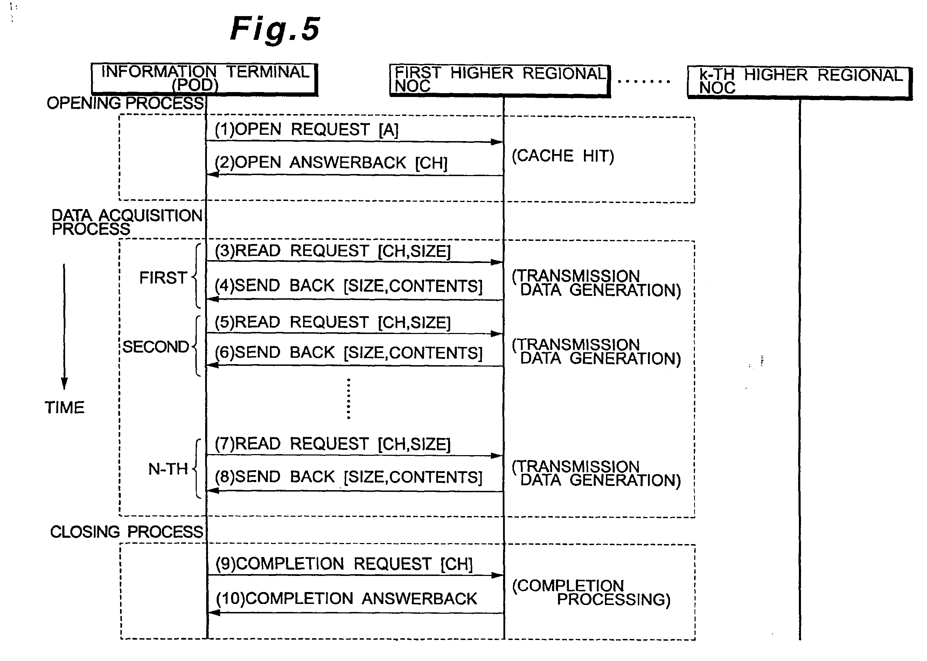

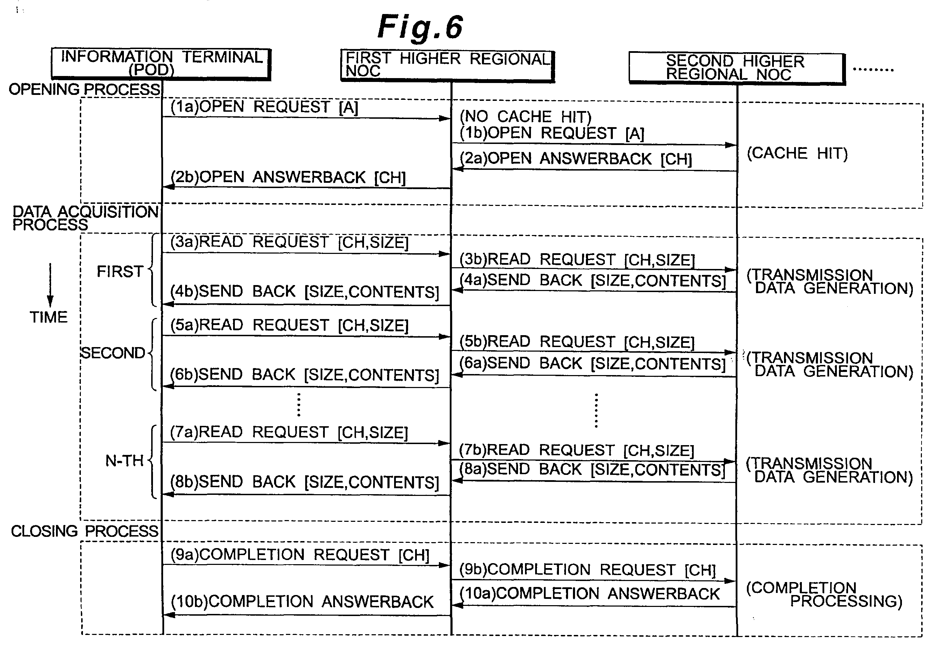

Now, an operational example of the information distribution system SYS having such configuration will be described in accordance with the flow charts shown in Figs. 5 and 6.

Here, shown in Figs. 5 and 6 is an operational example in which a customer operates an arbitrary information terminal POD to make a distribution request for a desired music data. In other words, the operational example is the case where the distribution request is issued from, e.g., the information terminal POD1.

In Fig. 5, with an information recording medium such as a MD inserted in the recording medium recording mechanism 22 and a prescribed amount of money deposited in the money control mechanism 25, a customer operates the touch-panel type operating section 28 on the information terminal POD to select his desired piece of music [A]. This starts the distribution processing.

Initially, a request for an opening process is issued from the information terminal POD to the regional control center positioned immediately above on the upstream side (the first higher regional NOC, in the figure). This opening process has an aim to establish a band (channel) on the communication line LX for distributing music data to the information-terminal POD side.

In requesting the above-mentioned opening process, an open request command (1) is transmitted being accompanied with a data indicating the piece of music [A]. The cache server 200 installed on the first higher regional NOC receives this open request command (1), and the retrieval server 13 searches the piece of music [A]. When the piece of music [A] is found (cache hit), the music data corresponding to the piece of music [A] is determined to be stored in the cluster servers 16 and 17, and an open answerback (2) is sent to the information-terminal POD side.

Here, the open answerback (2) is sent being accompanied with a channel data [CH] for establishing two-way communications. The data for the decryption key is also sent with the open answerback (2).

Reception of this channel data [CH] by the information terminal POD enables the two-way communications.

For example, in the case where an open request command (1) is issued from the information terminal POD1 of Fig. 1 and a cache hit occurs on the cache server 200 in the immediately-above regional control center #Ni, the two-way communications are established between the information terminal POD1 and the cache server 200. Accordingly, the regional control center #N5 and the central control center #N1 both positioned yet higher than the regional control center #N1 are not involved in this request from the information terminal POD1.

Referring again to Fig. 5, the information terminal POD, on receiving the open answerback (2), initiates a data acquisition process to acquire the music data of the customer-selected piece of music [A].

Initially, a read request command (3) is transmitted. Here, the command (3) is transmitted with a size indication data [SIZE] for use in packeting the channel data [CH] and the music data into a prescribed data length for reception.

Upon receiving this read request command (3), the cache server 200 installed in the first higher regional NOC reads out the music data stored in one of the cluster servers 16 and 17, and packets the music data on the basis of the size indication data [SIZE]. In this manner the transmission data in packets having a prescribed data length (hereinafter, referred to as contents data) are generated. The first contents data [CONTENTS] is then transmitted back to the information-terminal POD side.

In this transmission, the size indication data [SIZE] is attached to the contents data [CONTENTS] so that the information-terminal POD side ensures reception of the contents data [CONTENTS]. The contents data [CONTENTS] is then stored into a data buffer memory provided in the central processing section 20 on the information-terminal POD side.

After the completion of this first data acquisition process, the same data acquisition processes as the first should be repeated. That is, since the music data are divided into a plurality of packets for distribution, the same data acquisition processes (5) to (8) as the first processing (1), (2) are repeated for N times until the distribution of all packets is finished.

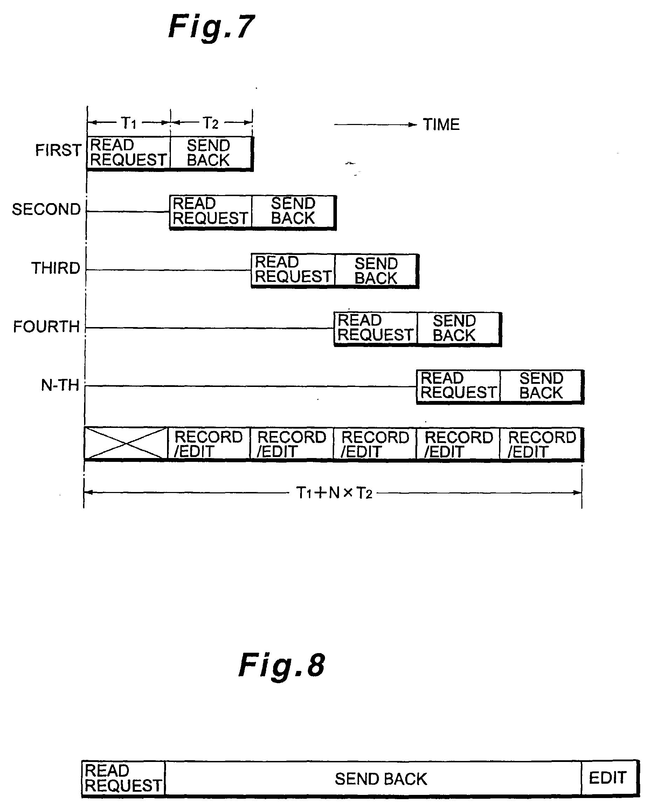

As schematically shown in Fig. 7, when the information terminal POD is acquiring a contents data [CONTENTS] sent back each time, the central processing section 20 performs decryption of the last contents data [CONTENTS] received, and supplies the decrypted contents data to the recording medium recording mechanism 22 to record the same onto an information recording medium such as an MD. In other words, the information terminal POD performs in parallel the acquisition of contents data [CONTENTS] and the editing process for decrypting contents data and recording the same onto an information recording medium.

The information terminal POD thus completes the acquisition of the entire music data before a closing process is initiated. That is, there comes a process to terminate (close) the series of processes according to the customer's request.

Initially, a completion request command (9) having a channel data [CH] attached thereto is sent from the information terminal POD to the cache server 200 installed in the first higher regional NOC. Here, sent concurrently with the completion request command (9) is an accounting data indicating that the piece of music (A) has been just distributed and vended.

Upon receiving this completion request command (9), the aforesaid cache server 200 stores the accounting data into the accounting management server 12. This accounting data is also stored into the historical information storing section 21.

Then, a completion answerback (10) is sent from the cache server 200 to the information terminal POD, so that the channel in use is closed and the information recording medium having the music data recorded thereon is offered to the customer, completing the entire distribution processing.

In this connection, the completion answerback (10) mentioned above is sent having a confirmation data attached thereto, the confirmation data showing that the accounting data is stored into the accounting management server 12 in the cache server 200.

As described above, when the music data of a customer-desired piece of music is already in the regional control center positioned immediately above the information terminal POD, the distribution is carried out without involving other regional control centers positioned yet higher than the regional control center and without involving the central control center #N1. Thus, the regional control centers #N2-#Ni realize rational decentralized processing over all the information terminals POD1-PODj, allowing a large reduction in the load on the central control center #N1. This also eliminates the need for communication lines LX of larger capacities, and produces an excellent effect that high-speed distribution is possible even when communication lines LX of smaller capacities are used.

Furthermore, as shown in Fig. 7, while contents data in packets are being transmitted back in response to the read requests, the information terminal POD edits last-acquired contents data and records the same onto the information recording medium simultaneously. The time required to receive the entire music data adds up to $T1+N{\times}T2$, wherein T1 is the time required for the first read request, T2 is a time required to transmit a contents data, and N is a number of times of the transmission. As a result, the information recording medium can be offered to the customer almost at the same time as the reception of the entire music data is completed. Thus, the distribution processing can be completed without keeping the customer waiting.

Incidentally, provided as shown in Fig. 8 that a read request is issued from the information terminal POD to the higher regional control center and the regional control center continuously sends back the entire music data in response to the request, the information-terminal POD side should have difficulty in performing the editing processes such as the recording onto the information recording medium until the reception of the entire music data is completed. The recording onto the information recording medium should therefore be performed after the reception, keeping the customer waiting. In contrast the present embodiment packet its music data, so that the distribution processing is substantially reduced in time, inclusive of the processing in the information terminal POD.

Now, with reference to Fig. 6, description will be made on another operational example. This example illustrates a distribution operation in which the regional control center (the first higher regional NOC) positioned immediately above the information terminal POD does not contain the music data of a customer-desired piece of music [A], and a yet higher regional control center (the second higher regional NOC) has the music data of the customer-desired piece of music [A].

Specifically, this is the case where a distribution request is made from the information terminal POD1 shown in Fig. 1 and the music data of the customer-desired piece of music [A] exists not in the regional control center #Ni but in the yet higher regional control center #N5.

In Fig. 6, the distribution to the information POD is carried out through the opening process, the data acquisition processes, and the closing process shown in Fig. 5.

Note that upon the open request (1a) no cache hit occurs in the regional control center positioned immediately above (i.e., the first higher regional NOC) due to the absence of the requested piece of music. This results in an open request command (1b) being transmitted to the yet higher regional control center (the second higher regional NOC).

When a cache hit occurs in response thereto, the second higher regional NOC sends an open answerback (2a) to the first higher regional NOC. Then, the first higher regional NOC sends an open answerback (2b) to the information terminal POD.

This allows two-way communications between the information terminal POD and the second higher regional NOC with the intermediary of the first higher regional NOC.

In data acquisition processes, the music data is sent back from the second higher regional NOC to the information terminal POD with the intermediary of the first higher regional NOC, also. The music data here is sent in packets to repeat the two-way communications for N times until the information terminal POD acquires the entire music data. In addition, the retrieval data for use in retrieving the music data is sent back from the second higher regional NOC to the first higher regional NOC. This retrieval data is stored into the retrieval server 13 on the cache server 200 installed in the first higher regional NOC.

Then, the closing process is performed to complete the entire distribution processing.

It should be noted here that when the contents data [CONTENTS] in packets are sent back from the second higher regional NOC to the first higher regional NOC as shown by the sending-back (4a), (6a) and (8a) in Fig. 6, the cache server 200 installed in the first higher regional NOC not only transfers these contents data [CONTENTS] to the information-terminal POD side, but also stores the same into the cluster servers 16 and 17.

Therefore, next time the music data of the same piece of music is requested from the information terminal POD, the cache server 200 in the first higher regional NOC simply sends back the music data from its own cluster server 16 or 17 as in the case shown in Fig. 5.

Moreover, each time a piece of music not existing on the cache server 200 of the first higher regional NOC is requested from the information-terminal POD side, the music data of such piece is accumulated into the cluster servers 16 and 17 on the cache server 200 installed in the first higher regional NOC. This results in so-called rich assortment of merchandise.

Meanwhile, if the customer-requested music data does not exist in the second higher regional NOC as shown in Fig. 6, a request is forwarded to a yet higher regional NOC. Even if absent again, the music data can finally be distributed from the central control center #N1. This produces an excellent effect that each regional control center #N2-#Ni inevitably becomes rich in the assortment of merchandise.

Furthermore, accumulated into each regional control center #N2-#Ni shown in Fig. 1 are the music data according to the types of customers who actually access each information terminal POD1-PODj and the tastes of the customers. As a result, it becomes possible to promptly offer music data according to the types of and the tastes of the customers.

In the foregoing descriptions, when a customer-requested music data does not exist in the regional control center to which the distribution request is made from an information terminal POD, a request for the music data should soon be made to a yet higher regional control center or the central control center.

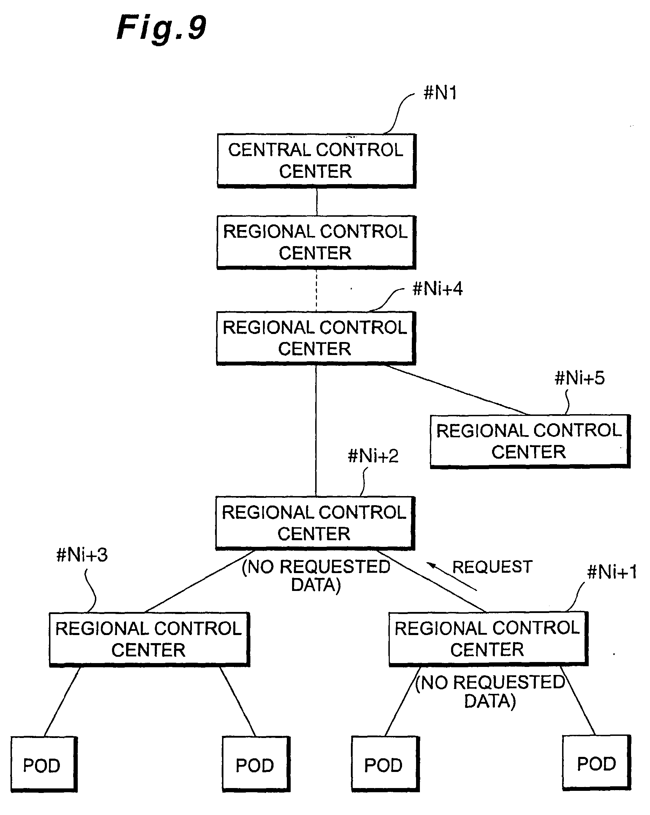

As schematically shown in Fig. 9, however, in the case where a regional control center not having the requested music data (e.g., #Ni+1 in the figure) forwards a request for the music data to an immediately-higher regional control center (e.g., #Ni+2 in the figure) and the regional control center #Ni+2 does not have the music data, either, the regional control center #Ni+2 may begin with a request to another regional control center connected on the downstream side thereof (e.g., #Ni+3 in the figure) before issuing the request to the yet higher regional control center #Ni+4 in the absence of the music data, instead of immediately making a request to the higher regional control center (e.g., #Ni+4 in the figure).

In other words, when a regional control center #Ni+2 has a plurality of regional control centers #Ni+1 and #Ni+3 connected thereto on the downstream side in parallel, the regional control center #Ni+2 may play a central role to share the music data in the plurality of regional control centers #Ni+1 and #Ni+3 put which lie in closer positions in terms of node numbers on the network.

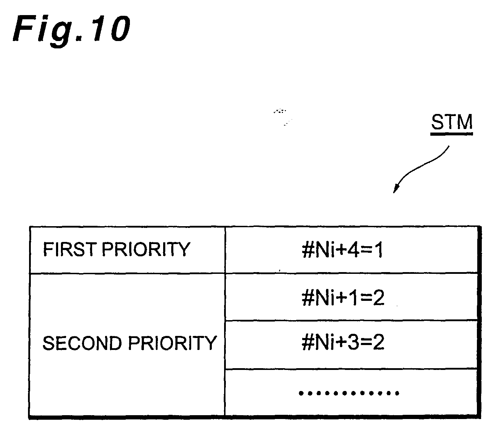

In this case, the cache server 200 to be installed in the regional control server #Ni+2 (more specifically, the retrieval server 13 therein) is provided with a stack memory STM as shown in Fig. 10, in which priority data are preset so as to place the higher regional control center #Ni+4 at the first priority "#Ni+4=1," and the lower regional control centers #Ni+1 and #Ni+3 at the second priority "#Ni+1=2," "#Ni+3=2."

Here, when a request for a music data is issued from the regional control center #Ni+1, the absence of the music data in the regional control center #Ni+2 results in the cache server 200 in the regional control center #Ni+2 examining the priority data described above and issuing a request to the regional control center #Ni+3 corresponding to the second priority "Ni+3=2," and further issuing, if the music data is absence there, a request to the higher regional control center #Ni+4 corresponding to the first priority "#Ni+4=1."

In this way, the regional control centers positioned on branch nodes of the network should involve their surrounding regional control centers to constitute small networks. This reduces, even if the present information distribution system SYS becomes enormous in system configuration, the load on the central control center #N1 to construct a rational decentralized processing system.

In addition, low-use music data can be gradually removed from each regional control center for more efficient use of the storage capacities of the cluster servers 16 and 17 provided in each cache server 200.

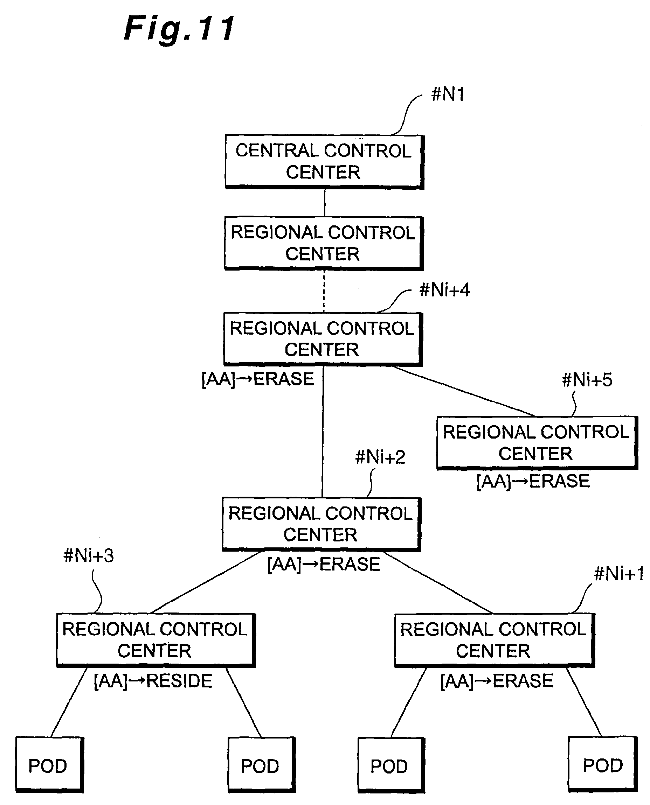

For example, assume that an identical music data [AA] has been in each of the regional control centers #Ni+1 to #Ni+5 shown in Fig. 11 and customers' requests for the music data [AA] have practically disappeared from the regional control centers #Ni+1, #Ni+2, #Ni+4, and #Ni+5 whereas such requests are still made from information terminals connected to the regional control center #Ni+3. In such a case, each cache server 200 in the regional control centers #Ni+1, #Ni+2, #Ni+4, and #Ni+5 erases the aforementioned low-use music data [AA] based on a prescribed use-frequency determination threshold. Meanwhile, the cache server 200 in the regional control center #Ni+3 holds the above-mentioned music data [AA] because the music data [AA] is greater in frequency of use than the prescribed use-frequency determination threshold.

Here, if a request for the above-mentioned music data [AA] is made from the regional control center #Ni+1 to the higher regional control center #Ni+2, the regional control center #Ni+2 can issue a request therefor to the regional control center #Ni+3 instead of immediately issuing the same to the higher regional control center #Ni+4, to distribute the music data [AA] to the regional-control-center #Ni+1 side.

Accordingly, this allows the efficient use of the storage capacities of the cluster servers 16 and 17 in each cache server 200 as described above, and further enables the prompt distribution processing in response to customers' requests.

Thus, according to the present embodiment, an excellent effect is obtained that high-speed distribution is realized without using high-capacity communication lines. Besides, it is possible to construct a decentralized processing system in which a large reduction can be made in the load on the center server 100 installed in the central control center #N1.

Moreover, the center server 100 in the central control center #Ni and all the cache servers 200 in the regional control center #N2-#Ni can be aggregated into an organic distribution network, constructing a progressive distribution network system which can offer excellent convenience to its customers. For example, it is possible to construct an on-demand network system which can carry out the accounting processing with high reliability and excellent scalability.

Besides, while descriptions have been made mainly on a system for distributing audio information, image information can also be distributed at high speeds.

In addition, the information recording media are not limited to MDs, and may include writable CDs and DVDs.

Moreover, while there have been described the cases where the communication lines LX use commercial communication lines of optical fiber transmission lines or commercial communication lines of coaxial cables, radio channels can also be used by providing radio network interfaces for the center server 100, the cache severs 200, and the information terminals POD. The communication lines LX can also use radio channels and wire communication lines in appropriate combination.

Furthermore, the use of radio channels can make the information terminals POD into mobile, portable information terminals.

As described above, according to the present invention, distribution information according to distribution requests is accumulated into the storages of relay distribution apparatuses to which the distribution requests are made from information terminals. Therefore, the distribution requests being sent up to the central distribution apparatus are reduced in frequency. Consequently, this reduces the communication time between the issuance of a distribution request by an information terminal and the distribution of a distribution information, thereby allowing the distribution at higher speeds. This also permits use of communication lines having smaller transmission capacities.

While there has been described what are at present considered to be preferred embodiments of the present invention, it will be understood that various modifications may be made thereto, and it is intended that the appended claims cover all such modifications as fall within the true spirit and scope of the invention.

**Claims**

1. An information distribution system comprising:

   a central distribution apparatus connected to a communication line network, said apparatus controlling and managing various types of a large amount of distribution information and sending back, in accordance with a distribution request from a downstream side on said communication line network, distribution information corresponding to the distribution request;

a plurality of relay distribution apparatuses put in network connection on a downstream side of said central distribution apparatus through said communication line network, said relay distribution apparatuses each having a storage; and

at least one information terminal connected onto the downstream side of said central distribution apparatus or said relay distribution apparatuses through a communication line, said information terminal connected to said central distribution apparatus or said relay distribution apparatuses issuing a distribution request for arbitrary distribution information among said distribution information under control and management of said central distribution apparatus, and receiving said arbitrary distribution information being sent back in accordance with the distribution request, wherein said relay distribution apparatuses each:

receive a distribution request for said arbitrary distribution information issued from the information-terminal side positioned on the downstream side among said at least one information terminal, and

send back said arbitrary distribution information stored in said storage to the downstream side when the distribution information corresponding to said distribution request is stored in its storage;
whereas when the distribution information corresponding to said distribution request is not stored in its storage, further issue a distribution request for said arbitrary distribution information to a relay distribution apparatus positioned on the upstream side among said plurality of relay distribution apparatuses or to the central distribution apparatus positioned immediately above on the upstream side, so as to receive and distribute to the downstream side said arbitrary distribution information being distributed from the relay distribution apparatus on the upstream side or said central distribution apparatus having said arbitrary distribution information in accordance with said further distribution request, and store said arbitrary distribution information received.

2. The information distribution system according to claim 1, wherein said system comprises a plurality of said at least one information terminal.

3. The information distribution system according to claim 1 or 2, wherein said central distribution apparatus or relay distribution apparatuses, in distributing said distribution information to the downstream side, divide said distribution information into prescribed packets and distribute the same sequentially.

4. The information distribution system according to any one of claims 1 to 3, wherein, when a relay distribution apparatus receiving the distribution request for said arbitrary distribution information issued from the information-terminal side positioned on the downstream side does not store the distribution information, the relay distribution apparatus issues a distribution request for said arbitrary distribution information to another relay distribution apparatus positioned on the downstream side, and in the case where said arbitrary distribution information corresponding to the distribution request is stored in said another relay distribution apparatus, receives and stores said arbitrary distribution information from said another relay distribution apparatus and further distributes the same to said downstream side, whereas in the cases when a response is returned that said arbitrary distribution information is not stored in the storage of said another relay distribution apparatus, further issues a distribution request for said arbitrary distribution information to said relay distribution apparatus positioned on the upstream side or the central distribution apparatus positioned immediately above on the upstream side.

5. The information distribution system according to any one of claims 1 to 4, wherein said information terminal or terminals each comprise a recorder for recording onto an information recording medium said distribution information being sent back in accordance with the distribution request for said arbitrary distribution information.

6. The information distribution system according to claim 5, wherein said information terminal or terminals each has a control unit for vending said information recording medium, and sending accounting information on the value for the vending through said relay distribution apparatus or apparatuses to said central distribution apparatus or sending the same directly to said central distribution apparatus.

7. In an information distribution system according to any one of claims 1 to 6, a method of distributing information comprises the steps of:

distributing a distribution request for arbitrary distribution information among said distribution information under control and management of said central distribution apparatus from said information terminal on a downstream side on said communication line network upstream to said central distribution apparatus;

receiving a distribution request for said arbitrary distribution information by each of said relay distribution apparatuses;

sending back said arbitrary distribution information stored in said storage of said relay distribution apparatuses to the downstream side when the distribution information corresponding to said distribution request is stored in its storage;

issuing a distribution request for said arbitrary distribution information to a relay distribution apparatus positioned on the upstream side among said plurality of relay distribution apparatuses or to the central distribution apparatus positioned immediately above on the upstream side, when the distribution information corresponding to said distribution request is not stored in its storage;

receiving and distributing to the downstream side said arbitrary distribution information being distributed from the relay distribution apparatus on the upstream side or said central distribution apparatus having said arbitrary distribution information in accordance with said further distribution request;

storing said arbitrary distribution information received;

receiving said arbitrary distribution information by said information terminal.

# Fig.1

# Fig.2

# Fig.3

# Fig.4

POD

LX ←——→ ROUTER ←——→ 18

19 — HUB

- CENTRAL PROCESSING SECTION — 20
- HISTORICAL INFORMATION STORING SECTION — 21
- RECORDING MEDIUM RECORDING MECHANISM — 22
- RECORDING MEDIUM VENDING MECHANISM — 23
- PRINT MECHANISM — 24
- MONEY CONTROL MECHANISM — 25
- DEMONSTRATION DISPLAY SECTION — 26
- AUDIO REPRODUCTION SECTION — 27
- TOUCH-PANEL TYPE OPERATION SECTION — 28

# Fig.5

| INFORMATION TERMINAL (POD) | FIRST HIGHER REGIONAL NOC | ....... | k-TH HIGHER REGIONAL NOC |
|---|---|---|---|

**OPENING PROCESS**

(1)OPEN REQUEST [A] →

(2)OPEN ANSWERBACK [CH] ←   (CACHE HIT)

**DATA ACQUISITION PROCESS**

FIRST
- (3)READ REQUEST [CH,SIZE] →
- (4)SEND BACK [SIZE,CONTENTS] ←   (TRANSMISSION DATA GENERATION)

SECOND
- (5)READ REQUEST [CH,SIZE] →
- (6)SEND BACK [SIZE,CONTENTS] ←   (TRANSMISSION DATA GENERATION)

N-TH
- (7)READ REQUEST [CH,SIZE] →
- (8)SEND BACK [SIZE,CONTENTS] ←   (TRANSMISSION DATA GENERATION)

**TIME** ↓

**CLOSING PROCESS**

(9)COMPLETION REQUEST [CH] →

(10)COMPLETION ANSWERBACK ←   (COMPLETION PROCESSING)

EP 1 096 749 A2

# Fig.6

| INFORMATION TERMINAL (POD) | FIRST HIGHER REGIONAL NOC | SECOND HIGHER REGIONAL NOC | ........ |
|---|---|---|---|

**OPENING PROCESS**

(1a)OPEN REQUEST [A] →

(NO CACHE HIT)
(1b)OPEN REQUEST [A] →

(2a)OPEN ANSWERBACK [CH] ←

(CACHE HIT)

← (2b)OPEN ANSWERBACK [CH]

**DATA ACQUISITION PROCESS**

↓ TIME

**FIRST**

(3a)READ REQUEST [CH,SIZE] →

(3b)READ REQUEST [CH,SIZE] →

(4a)SEND BACK [SIZE,CONTENTS] ←

(TRANSMISSION DATA GENERATION)

← (4b)SEND BACK [SIZE,CONTENTS]

**SECOND**

(5a)READ REQUEST [CH,SIZE] →

(5b)READ REQUEST [CH,SIZE] →

(6a)SEND BACK [SIZE,CONTENTS] ←

(TRANSMISSION DATA GENERATION)

← (6b)SEND BACK [SIZE,CONTENTS]

⋮

**N-TH**

(7a)READ REQUEST [CH,SIZE] →

(7b)READ REQUEST [CH,SIZE] →

(8a)SEND BACK [SIZE,CONTENTS] ←

(TRANSMISSION DATA GENERATION)

← (8b)SEND BACK [SIZE,CONTENTS]

**CLOSING PROCESS**

(9a)COMPLETION REQUEST [CH] →

(9b)COMPLETION REQUEST [CH] →

(10a)COMPLETION ANSWERBACK ←

(COMPLETION PROCESSING)

← (10b)COMPLETION ANSWERBACK

EP 1 096 749 A2

# Fig.7

# Fig.8

# Fig.9

#N1

CENTRAL CONTROL
CENTER

REGIONAL CONTROL
CENTER

#Ni+4

REGIONAL CONTROL
CENTER

#Ni+5

REGIONAL CONTROL
CENTER

#Ni+2

REGIONAL CONTROL
CENTER

(NO REQUESTED
DATA)

REQUEST

#Ni+3

REGIONAL CONTROL
CENTER

#Ni+1

REGIONAL CONTROL
CENTER

(NO REQUESTED
DATA)

POD

POD

POD

POD

# Fig.10

STM

| FIRST PRIORITY | #Ni+4=1 |
|---|---|
| SECOND PRIORITY | #Ni+1=2 |
| | #Ni+3=2 |
| | • • • • • • • • • • • |

# Fig.11